# EUROPEAN PATENT APPLICATION

(11) **EP 4 589 820 A1**
(43) Date of publication of application: **23.07.2025**
(21) Application number: 24221564.8
(22) Date of filing: 19.12.2024
(51) Int. Cl.: H02K 3/52, H02K 11/25

(54) **MOTOR**

(30) Priority: 18.01.2024 JP 2024005822
(71) Applicant: TOYOTA JIDOSHA KABUSHIKI KAISHA, Toyota-shi, Aichi-ken 471-8571 (JP)
(72) Inventor: ONO, Ryo, Toyota-shi 471-8571 (JP); URANO, Hiroaki, Toyota-shi 471-8571 (JP); YOSHIKAWA, Makoto, Toyota-shi 471-8571 (JP); YAMATO, Fumiaki, Toyota-shi 471-8571 (JP); UKAJI, Hajime, Toyota-shi 471-8571 (JP); YAMAGUCHI, Daiki, Toyota-shi 471-8571 (JP); TAKAO, Ren, Toyota-shi 471-8571 (JP)
(74) Representative: TBK

(57) **Abstract**

A motor includes: a stator core (10) having a tubular shape; a plurality of coils (20) installed in the stator core (10); a busbar (30) configured to be electrically connected to at least one of the coils (20); and a temperature sensor (40) installed on the busbar (30). The busbar (30) includes a plurality of passing portions. At least part of the temperature sensor (40) passes through each of the passing portions and is installed on the busbar (30).

## Description

### BACKGROUND OF THE INVENTION

### 1. Field of the Invention

The technique disclosed in the present specification relates to motors.

### 2. Description of Related Art

A stator that is a component of a motor includes a stator core having a tubular shape, a plurality of coils installed in the stator core, and a plurality of busbars. The coils include, for example, a U-phase coil, a V-phase coil, and a W-phase coil, and are wound around the inner peripheral surface of the stator core by distributed winding. The busbars include a neutral busbar and three lead busbars. The neutral busbar connects the U-phase coil, the V-phase coil, and the W-phase coil to each other to form a neutral point of the coils. Each of the three lead busbars is electrically connected to a corresponding one of the U-phase coil, the V-phase coil, and the W-phase coil.

Japanese Unexamined Patent Application Publication No. 2023-123262 (JP 2023-123262 A) discloses a motor with a temperature sensor installed on a neutral busbar. In this motor, the temperature sensor is installed in a hole in the neutral busbar by interference fit.

### SUMMARY OF THE INVENTION

The present disclosure provides a motor that stably holds a temperature sensor on a busbar.

A motor according to an aspect of the present disclosure includes: a stator core having a tubular shape; a plurality of coils installed in the stator core; a busbar configured to be electrically connected to at least one of the coils; and a temperature sensor installed on the busbar. The busbar includes a plurality of passing portions. At least part of the temperature sensor passes through each of the passing portions and is installed on the busbar.

At least part of the temperature sensor is installed so as to be entangled with the busbar by passing through the passing portions. Therefore, in the motor disclosed in the present specification, the temperature sensor is stably held on the busbar.

In the motor according to the aspect of the present disclosure, at least one of the passing portions may be a notch provided in at least one of a pair of side edges extending in a longitudinal direction of the busbar. When the passage portion is a notch, the work of passing the temperature sensor through the passage portion is facilitated. This improves the ease of installing the temperature sensor on the busbar.

In the motor according to the aspect of the present disclosure, the side edges of the busbar may include a proximal edge located on a side closer to the stator core and a distal edge located on an opposite side from the proximal edge. The notch may be provided in the distal edge of the busbar. When the notch is provided in the distal edge of the busbar, a worker who installs the temperature sensor on the busbar can easily access the notch in the busbar. This facilitates the work of passing the temperature sensor through the passing portion. This improves the ease of installing the temperature sensor on the busbar.

In the motor according to the aspect of the present disclosure, the busbar may include an adjacent portion adj acent to the notch in a lateral direction of the busbar. The adjacent portion may include a side edge protrusion, a thick portion, or a combination of the side edge protrusion and the thick portion. The side edge protrusion may protrude in the lateral direction of the busbar from the side edge of the busbar. The thick portion may be thicker than a portion adjacent to the adjacent portion in the longitudinal direction of the busbar. If no measures are taken, forming the notch in the busbar reduces the sectional area of the adjacent portion (i.e., the area of its section perpendicular to the longitudinal direction of the busbar). This increases the electrical resistance of the busbar. In the above embodiment, the adjacent portion is the side edge protrusion, the thick portion, or a combination of the side edge protrusion and the thick portion. Therefore, an increase in electrical resistance of the adjacent portion is reduced.

In the motor according to the aspect of the present disclosure, the notch may include a first extending portion cut in a lateral direction of the busbar from the side edge of the busbar, and a second extending portion cut in the longitudinal direction of the busbar from the first extending portion at a position away from the side edge of the busbar. That is, at least part of the notch may have an L-shaped portion. When at least part of the notch has an L-shaped portion, the temperature sensor is effectively retained in the notch. Therefore, the temperature sensor is stably held on the busbar.

In the motor according to the aspect of the present disclosure, each of the coils may include a protruding coil portion protruding from the stator core on one side in an axial direction of the stator core. The busbar may be disposed adjacent to the protruding coil portion in the axial direction of the stator core, and may extend in a circumferential direction of the stator core.

In the motor according to the aspect of the present disclosure, the passing portions may be arranged in the circumferential direction of the stator core. Since the temperature sensor is installed in the longitudinal direction of the busbar, the temperature sensor is stably held on the busbar along a large length.

In the motor according to the aspect of the present disclosure, each of the passing portions may extend through the busbar in a radial direction of the stator core. In this embodiment, the temperature sensor may be installed on the busbar by, for example, first passing through the busbar from the inner side to the outer side in the radial direction (or from the outer side to the inner side in the radial direction) of the stator core, and then passing through the busbar from the outer side to the inner side in the radial direction (or from the inner side to the outer side in the radial direction) of the stator core.

In the motor according to the aspect of the present disclosure, the temperature sensor may include a thermistor temperature measurement portion and a cable portion connected to the thermistor temperature measurement portion. The thermistor temperature measurement portion may be installed on the busbar by passing through at least one of the passing portions. When the thermistor temperature measurement portion passes through the passing portion, the thermistor temperature measurement portion is installed near the busbar. Therefore, the sensitivity and response speed of the temperature sensor are improved.

In the motor according to the aspect of the present disclosure, the busbar and the thermistor temperature measurement portion may be integrally covered with a resin. Since the thermistor temperature measurement portion is installed in close contact with the busbar by the resin, the sensitivity and response speed of the temperature sensor are improved.

In the motor according to the aspect of the present disclosure, the coils may include a U-phase coil, a V-phase coil, and a W-phase coil. The busbar may be a neutral busbar that electrically connects the U-phase coil, the V-phase coil, and the W-phase coil to each other to form a neutral point of the coils. Instead of this embodiment, the busbar may be any one of three lead busbars provided corresponding to the U-phase coil, the V-phase coil, and the W-phase coil.

Details and further improvements of the motor disclosed in the present specification will be described below.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic perspective view of a stator;
FIG. 2 is a schematic sectional view of the stator that is parallel to the axial direction of a stator core;
FIG. 3 is a schematic sectional view including a busbar and a temperature sensor that is perpendicular to the axial direction of the stator core;
FIG. 4 is a schematic plan view of a modification of the busbar;
FIG. 5 is a schematic plan view of a modification of the busbar;
FIG. 6 is a schematic plan view of a modification of the busbar;
FIG. 7 is a schematic plan view of a modification of the busbar;
FIG. 8 is a schematic plan view of a modification of the busbar; and
FIG. 9 shows a schematic plan view of a modification of the busbar and a schematic side view of a proximal edge of the modification of the busbar.

### DETAILED DESCRIPTION OF EMBODIMENTS

### Embodiment

A stator that is a component of a motor will be described below with reference to the drawings. For clarity, the same components may be shown to have different shapes among the figures. However, the components denoted by the same signs indicate the same components. The motor disclosed in the present specification is not particularly limited, but may be mounted on, for example, an electrified vehicle. The term "electrified vehicle" as used herein includes a battery electric vehicle (BEV), a hybrid electric vehicle (HEV), a plug-in hybrid electric vehicle (PHEV), and a fuel cell electric vehicle (FCEV).

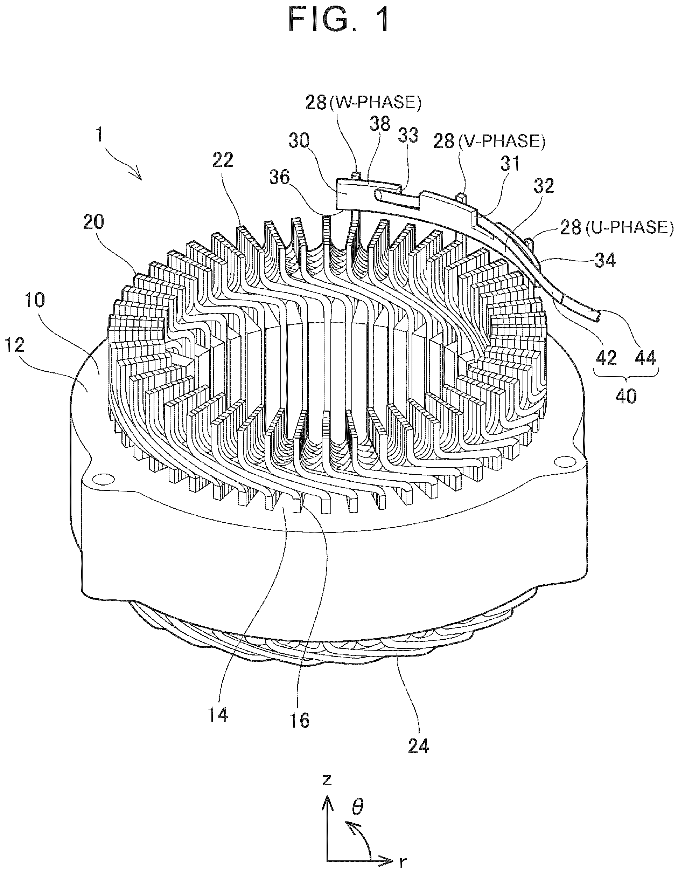

As shown in FIG. 1, a stator 1 includes a stator core 10, a plurality of segment coils 20, a busbar 30, and a temperature sensor 40.

In the present specification, a cylindrical coordinate system is defined by axial, radial, and circumferential directions based on the stator core 10 having a cylindrical shape. The z-axis shown in the figures is located on the central axis of the stator core 10, and indicates the axial direction of the stator core 10. In the present specification, the positive direction of the z-axis is referred to as one side in the axial direction, and the negative direction of the z-axis is referred to as the other side in the axial direction. The r-axis shown in the figures is perpendicular to the z-axis, and indicates the radial direction of the stator core 10. In the present specification, the positive direction of the r-axis is referred to as the outer side in the radial direction, and the negative direction of the r-axis is referred to as the inner side in the radial direction. The θ-axis shown in the figures is perpendicular to the z-axis and the r-axis, and indicates the circumferential direction of the stator core 10. In the present specification, the positive direction of the θ-axis is referred to as one side in the circumferential direction, and the negative direction of the θ-axis is referred to as the other side in the circumferential direction.

For example, the stator core 10 is formed by stacking a plurality of steel laminations made of a magnetic material in the axial direction. The stator core 10 includes a cylindrical yoke portion 12 and a plurality of teeth 14 extending radially inward from the inner peripheral surface of the yoke portion 12. A rotor (not shown) is inserted into a central hole of the yoke portion 12. Each of the teeth 14 extends from one opening edge to the other opening edge of the yoke portion 12 in the axial direction, and is located at a distance from adjacent teeth 14 in the circumferential direction. Each space between adjacent ones of the teeth 14 is called a slot 16.

Each of the segment coils 20 is inserted in corresponding two of the slots 16 of the stator core 10. Each of the segment coils 20 is a rectangular wire formed by coating the surface of a conductor (e.g., copper) with an insulator. Each of the segment coils 20 includes a first protruding coil portion 22 and a second protruding coil portion 24 that protrude from the slots 16 of the stator core 10 in the axial direction of the stator core 10. The first protruding coil portion 22 is a portion of the segment coil 20 that protrudes from the slots 16 of the stator core 10 on the one side in the axial direction. The second protruding coil portion 24 is a portion of the segment coil 20 that protrudes from the slots 16 of the stator core 10 on the other side in the axial direction. Each of the segment coils 20 is formed by forming the rectangular wire into a generally U-shape, inserting it into the slots 16 of the stator core 10 in the axial direction, and then bending it to form the first protruding coil portion 22 of the segment coil 20. The tip of the first protruding coil portion 22 of the segment coil 20 formed by the bending (that is a stripped portion where the insulator has been stripped to expose the conductor) is welded to the tip of the first protruding coil portion 22 of another segment coil 20 formed by the bending. The segment coils 20 connected by the welding form one coil. A U-phase coil, a V-phase coil, and a W-phase coil are thus wound around the inner peripheral surface of the stator core 10 by distributed winding.

The busbar 30 is disposed adjacent to the first protruding coil portions 22 in the axial direction. Specifically, the busbar 30 is disposed at a position slightly away from the first protruding coil portions 22 in the axial direction and within the range in which the first protruding coil portions 22 are present as viewed in the axial direction. The busbar 30 is a rectangular conductive plate curved in its longitudinal direction, and extends in the circumferential direction. In this example, the busbar 30 extends only along part of the entire circumference of the stator core 10. Alternatively, the busbar 30 may extend along the entire circumference of the stator core 10.

The busbar 30 includes an inner main surface 32 and an outer main surface 34. The inner main surface 32 and the outer main surface 34 face each other in the radial direction and extend in the longitudinal direction of the busbar 30. The busbar 30 further includes a pair of proximal and distal edges 36, 38. The proximal and distal edges 36, 38 face each other in the axial direction and extend in the longitudinal direction of the busbar 30. The proximal edge 36 is located closer to the stator core 10 than the distal edge 38.

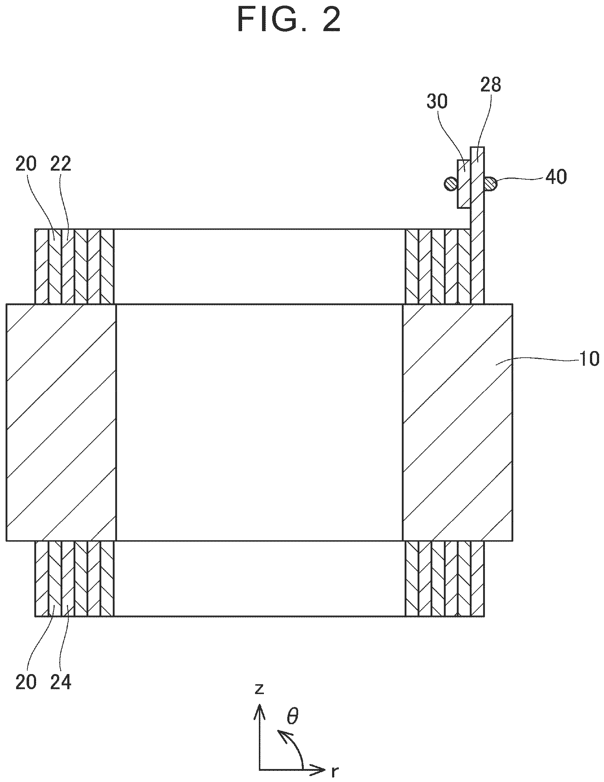

As shown in FIGS. 1 and 2, tip portions 28 of the segment coils 20 that are one ends of the U-phase, V-phase, and W-phase coils are joined to the busbar 30. Specifically, the tip portions 28 are welded to the outer main surface 34 of the busbar 30. The positions where the tip portions 28 are joined to the busbar 30 and the manner in which the tip portions 28 are joined to the busbar 30 are not particularly limited. The busbar 30 is therefore a neutral busbar that electrically connects the U-phase coil, the V-phase coil, and the W-phase coil to each other to form a neutral point of the coils. When the motor has a neutral point terminal (not shown), the neutral busbar is electrically connected to the neutral terminal. However, the present disclosure is not particularly limited to this. Such a neutral point terminal can be used for so-called neutral point charging, and is electrically connected to an external direct current (DC) power supply when charging a battery connected to the motor.

Each of tip portions (not shown) of the segment coils 20 that are the other ends of the U-phase, V-phase, and W-phase coils is electrically connected to a corresponding one of the three lead busbars (not shown). For example, such three lead busbars may be located radially outward of the stator core 10 and extend in the circumferential direction. Although not shown in the figures, the three lead busbars are electrically connected to a U-phase terminal, a V-phase terminal, and a W-phase terminal of the motor, respectively.

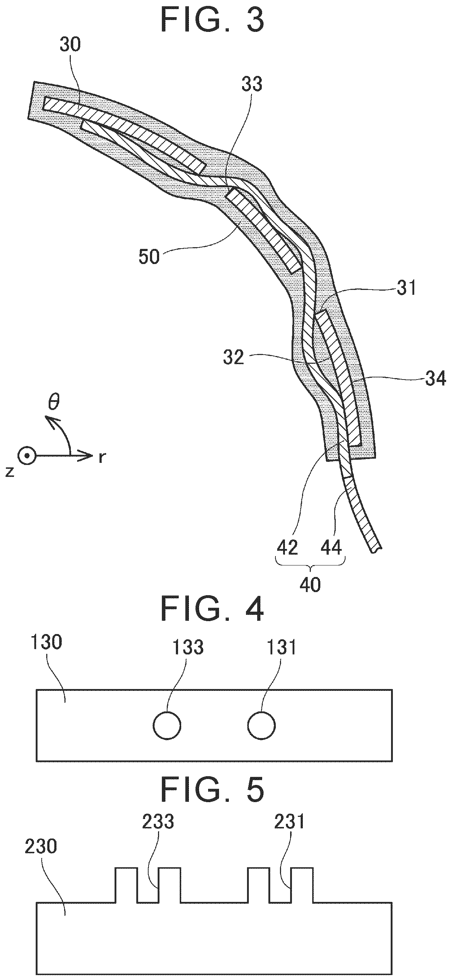

As shown in FIGS. 1 and 3, the busbar 30 has a first notch 31 and a second notch 33. Both the first notch 31 and the second notch 33 are formed in the distal edge 38 of the busbar 30, and extend through the busbar 30 in the radial direction between the inner main surface 32 and the outer main surface 34. The first notch 31 and the second notch 33 are located away from each other in the circumferential direction. Although only two notches 31, 33 are shown in this example, three or more notches may be formed in the busbar 30.

The temperature sensor 40 includes a thermistor temperature measurement portion 42 and a cable portion 44 connected to the thermistor temperature measurement portion 42. The thermistor temperature measurement portion 42 is, for example, but not particularly limited to, an electronic component having a temperature measurement resistor at its tip portion. The thermistor temperature measurement portion 42 has a structure in which two lead wires extending from the temperature measurement resistor are covered by a resin tube. The thermistor temperature measurement portion 42 is long, and most of the thermistor temperature measurement portion 42 excluding the temperature measurement resistor is flexible. The cable portion 44 also has a structure in which two conductor wires are covered by a resin tube. The cable portion 44 is long, and most of the cable portion 44 is flexible. Each of the two conductor wires of the cable portion 44 is electrically connected to a corresponding one of the two lead wires of the thermistor temperature measurement portion 42. A connector (not shown) is connected to the opposite end of the cable portion 44 from the end connected to the thermistor temperature measurement portion 42.

As shown in FIG. 1, the thermistor temperature measurement portion 42 is installed on the busbar 30 by passing through the first notch 31 and the second notch 33. The cable portion 44 may be installed on the busbar 30 by passing through either or both of the first notch 31 and the second notch 33. In this example, when observed from the cable portion 44 toward the tip of the thermistor temperature measurement portion 42, the thermistor temperature measurement portion 42 passes through the first notch 31 from the inner main surface 32 toward the outer main surface 34 of the busbar 30, and then passes through the second notch 33 from the outer main surface 34 toward the inner main surface 32 of the busbar 30. The thermistor temperature measurement portion 42 is thus installed on the busbar 30. The thermistor temperature measurement portion 42 is installed so as to be entangled with the busbar 30 by extending back and forth between the inner main surface 32 and the outer main surface 34 of the busbar 30. The temperature sensor 40 is thus stably held on the busbar 30. Since the first notch 31 and the second notch 33 are located away from each other in the longitudinal direction of the busbar 30, the thermistor temperature measurement portion 42 is stably held on the busbar 30 along a large length.

The first notch 31 and the second notch 33 that are formed in the distal edge 38 of the busbar 30 are located so as to be exposed outward from the stator core 10. Therefore, the first notch 31 and the second notch 33 are located at such positions that can easily accessed by a worker who installs the temperature sensor 40 on the busbar 30. This facilitates the work of passing the temperature sensor 40 through the first notch 31 and the second notch 33, which improves the ease of installing the temperature sensor 40 on the busbar 30.

In this example, the thermistor temperature measurement portion 42 passes through the first notch 31 and the second notch 33 and is thus installed on the busbar 30. Therefore, the thermistor temperature measurement portion 42 is installed near the busbar 30. Accordingly, the heat generated in the busbar 30 is efficiently transferred to the thermistor temperature measurement portion 42, which improves the sensitivity and response speed of the temperature sensor 40.

As shown in FIG. 3, the busbar 30 and the thermistor temperature measurement portion 42 are integrally covered with a resin 50. In FIGS. 1 and 2, the busbar 30 and the thermistor temperature measurement portion 42 are shown with the resin 50 removed for clarity. Although the resin 50 is not particularly limited, the resin 50 may be formed so as to integrally cover the busbar 30 and the thermistor temperature measurement portion 42 by, for example, coating the busbar 30 and the thermistor temperature measurement portion 42 with powdered resin, or immersing the busbar 30 and the thermistor temperature measurement portion 42 in molten resin. The resin 50 may be formed so as to integrally cover the welded joints at the tips of the first protruding coil portions 22 as well. Since the thermistor temperature measurement portion 42 is installed in close contact with the busbar 30 by the resin 50, the sensitivity and response speed of the temperature sensor 40 are improved. Since the heat generated in the busbar 30 can be transferred to the thermistor temperature measurement portion 42 via the resin 50, the sensitivity and response speed of the temperature sensor 40 are improved in this respect as well.

As described above, in the example in which the busbar 30 and the thermistor temperature measurement portion 42 are integrally covered with the resin 50, it is necessary to position the thermistor temperature measurement portion 42 with respect to the busbar 30 before covering them with the resin 50. It is also necessary to hold the thermistor temperature measurement portion 42 in close contact with the busbar 30 during the process of covering them with the resin 50. By passing specific positions of the thermistor temperature measurement portion 42 through the first notch 31 and the second notch 33, the thermistor temperature measurement portion 42 is accurately positioned with respect to the busbar 30. The thermistor temperature measurement portion 42 that has passed through the first notch 31 and the second notch 33 is held in close contact with the busbar 30. The technique of forming the first notch 31 and the second notch 33 in the busbar 30 is thus particularly useful when the busbar 30 and the thermistor temperature measurement portion 42 are integrally covered with the resin 50.

Modifications of the busbar 30 will be described below. Portions that have the same functions and effects as those of the busbar 30 are denoted by the same signs, and description thereof will be omitted.

FIG. 4 shows an example in which a busbar 130 has a plurality of through holes 131, 133. The temperature sensor 40 is installed on the busbar 130 by passing through each of the through holes 131, 133. Although the temperature sensor 40 is passed through the through holes 131, 133 with less ease, the through holes 131, 133 can reliably retain the temperature sensor 40 therein.

FIG. 5 shows an example in which a busbar 230 has a plurality of engagement portions 231, 233 formed by a plurality of protrusions protruding from a side edge of the busbar 230. The protrusions are located at intervals in the longitudinal direction of busbar 230. Each of the engagement portions 231, 233 is defined by adjacent ones of the protrusions, and the distance between the adjacent protrusions is adjusted so that they can hold the temperature sensor 40. The temperature sensor 40 is installed on the busbar 230 by passing through each of the engagement portions 231, 233.

As shown in the modifications of FIGS. 4 and 5, various geometric shapes that extend through the busbar in the direction connecting the pair of main surfaces of the busbar and through which the flexible, long temperature sensor 40 can pass can be used as a structure for stably holding the temperature sensor 40. In the present specification, the portions of the busbar that have various geometric shapes and through which the temperature sensor 40 can pass are referred to as passing portions. A plurality of passing portions formed in the busbar may be a combination of passing portions of a single type (e.g., a combination of only notches), or may be a combination of passing portions of different types (e.g., any combination of notches, through holes, and engagement portions).

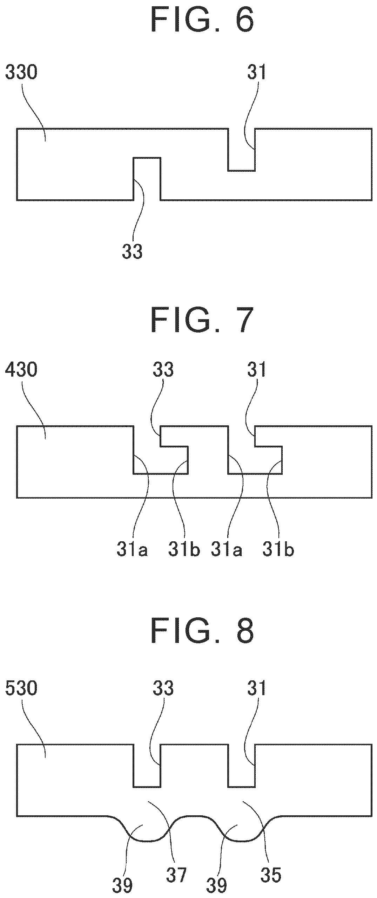

FIG. 6 shows an example in which a busbar 330 has the first notch 31 in one side edge of the busbar 330 and the second notch 33 in the other side edge of the busbar 330. The positions where the notches 31, 33 are formed in the busbar 330 may be adjusted as appropriate according to the position and orientation of the busbar 330.

FIG. 7 shows an example in which the first notch 31 of a busbar 430 includes a first extending portion 31a and a second extending portion 31b. The first extending portion 31a extends in the lateral direction of the busbar 330 from a side edge of the busbar 430. The second extending portion 31b extends in the longitudinal direction of the busbar 430 from the first extending portion 31a at a position away from the side edge of the busbar 430. The second notch 33 of the busbar 430 has the same structure as the first notch 31. As described above, both the first notch 31 and the second notch 33 are in an L-shape. When the first notch 31 and the second notch 33 are in an L-shape, the temperature sensor 40 is effectively retained in the first notch 31 and the second notch 33. Therefore, the temperature sensor 40 is stably held on the busbar 430.

FIG. 8 shows an example in which a busbar 530 includes a first adjacent portion 35 and a second adjacent portion 37. The first adjacent portion 35 is adjacent to the first notch 31 in the lateral direction of the busbar 530, and the second adjacent portion 37 is adjacent to the second notch 33 in the lateral direction of the busbar 530. Both the first adjacent portion 35 and the second adjacent portion 37 have a side edge protrusion 39 protruding in the lateral direction of the busbar 530 from a side edge of the busbar 530. If the first adjacent portion 35 and the second adjacent portion 37 do not have the side edge protrusion 39, forming the first notch 31 and the second notch 33 in the busbar 530 reduces the sectional areas of the first adjacent portion 35 and the second adjacent portion 37 (i.e., the areas of their sections perpendicular to the longitudinal direction of the busbar 530). This increases the electrical resistance of the busbar 530. In this example, each of the first adjacent portion 35 and the second adjacent portion 37 has the side edge protrusion 39. This reduces an increase in electrical resistance of the first adjacent portion 35 and the second adjacent portion 37.

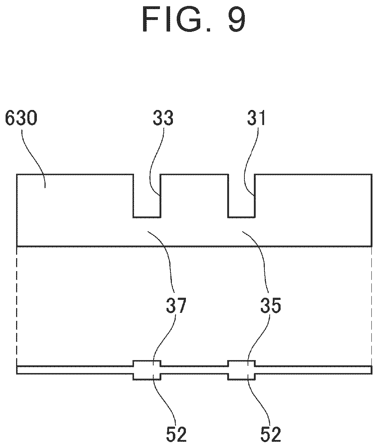

FIG. 9 shows an example in which the first adjacent portion 35 of a busbar 630 that is adjacent to the first notch 31 in the lateral direction of the busbar 630 has a thick portion 52. The thick portion 52 is thicker than a portion adjacent to the first adjacent portion 35 in the longitudinal direction of the busbar 630. The second adjacent portion 37 adjacent to the second notch 33 has the same structure as the first adjacent portion 35. In this example as well, even when the first notch 31 and the second notch 33 are formed, a decrease in sectional area of the first adjacent portion 35 and the second adjacent portion 37 is reduced, and an increase in electrical resistance of the first adjacent portion 35 and the second adjacent portion 37 is reduced. The first adjacent portion 35 and the second adjacent portion 37 may have both the side edge protrusion 39 (see FIG. 8) and the thick portion (see FIG. 9).

## Claims

1. A motor comprising:
a stator core (10) having a tubular shape;
a plurality of coils (20) installed in the stator core (10);
a busbar (30) configured to be electrically connected to at least one of the coils (20), the busbar (30) including a plurality of passing portions; and
a temperature sensor (40) installed on the busbar (30), wherein
at least part of the temperature sensor (40) passes through each of the passing portions and is installed on the busbar (30).

2. The motor according to claim 1, wherein at least one of the passing portions is a notch (31, 33) provided in at least one of a pair of side edges extending in a longitudinal direction of the busbar (30).

3. The motor according to claim 2, wherein
the side edges of the busbar (30) include a proximal edge (36) located on a side closer to the stator core (10) and a distal edge (38) located on an opposite side from the proximal edge (36), and
the notch (31, 33) is provided in the distal edge (38) of the busbar (30).

4. The motor according to claim 2, wherein
the busbar (30) includes an adjacent portion (35, 37) adjacent to the notch (31, 33) in a lateral direction of the busbar (30),
the adjacent portion (35, 37) includes a side edge protrusion (39), a thick portion (52), or a combination of the side edge protrusion (39) and the thick portion (52),
the side edge protrusion (39) protrudes in the lateral direction of the busbar (30) from the side edge of the busbar (30), and
the thick portion (52) is thicker than a portion adjacent to the adjacent portion (35, 37) in the longitudinal direction of the busbar (30).

5. The motor according to claim 2, wherein the notch (31, 33) includes a first extending portion (31a) cut in a lateral direction of the busbar (30) from the side edge of the busbar (30), and a second extending portion (31b) cut in the longitudinal direction of the busbar (30) from the first extending portion (31a) at a position away from the side edge of the busbar (30).

6. The motor according to claim 1, wherein each of the coils (20) includes a protruding coil portion (22, 24) protruding from the stator core (10) on one side in an axial direction of the stator core (10), and the busbar (30) is disposed adjacent to the protruding coil portion (22, 24) in the axial direction of the stator core (10) and extends in a circumferential direction of the stator core (10).

7. The motor according to claim 6, wherein the passing portions are arranged in the circumferential direction of the stator core (10).

8. The motor according to claim 6, wherein each of the passing portions extends through the busbar (30) in a radial direction of the stator core (10).

9. The motor according to claim 1, wherein
the temperature sensor (40) includes a thermistor temperature measurement portion (42) and a cable portion (44) connected to the thermistor temperature measurement portion (42), and
the thermistor temperature measurement portion (42) is installed on the busbar (30) by passing through at least one of the passing portions.

10. The motor according to claim 9, wherein the busbar (30) and the thermistor temperature measurement portion (42) are integrally covered with a resin.

11. The motor according to any one of claims 1 to 10, wherein
the coils (20) include a U-phase coil, a V-phase coil, and a W-phase coil, and
the busbar (30) is a neutral busbar that electrically connects the U-phase coil, the V-phase coil, and the W-phase coil to each other to form a neutral point of the coils (20).
